# EUROPEAN PATENT APPLICATION

(11) **EP 4 287 101 A1**
(43) Date of publication of application: **06.12.2023**
(21) Application number: 23174512.6
(22) Date of filing: 22.05.2023
(51) Int. Cl.: G06Q 40/03, G06Q 20/40, G06Q 20/24, G06Q 20/20

(54) **METHOD AND APPARATUS FOR FACILITATING AN AGGREGATED MARKETPLACE FOR PROVIDING FINANCING OFFERS IN AN ONLINE COMMERCIAL ECOSYSTEM**

(30) Priority: 31.05.2022 US 202217828507
(71) Applicant: Affirm, Inc., San Francisco, CA 94108 (US)
(72) Inventor: KAPOOR, Vishal, Bellevue, 98004 (US); BELE, Dipti, San Francisco, 94117 (US); SEAMAN, John, San Francisco, 94108 (US)
(74) Representative: Piotrowicz, Pawel Jan Andrzej

(57) **Abstract**

A method for facilitating presentation of financial offers from multiple sources on a single platform may include receiving an indication of a request from a customer for a financing offer, receiving qualification information associated with the request for provision to a plurality of underwriting models where the underwriting models are associated with respective different underwriters, running each of the underwriting models to determine a listing of approving underwriters, applying curation logic to the listing of approving underwriters, selecting, based on the curation logic, one or more of the approving underwriters to receive a generated offer, and directing display, at a communication device associated with the customer, of the generated offer for each of the one or more of the approving underwriters that is selected.

## Description

### TECHNICAL FIELD

Example embodiments generally relate to financial industry technologies and, in particular, relate to apparatuses, systems, and methods for facilitating commerce by enabling merchants to offer multiple financing options to customers at the point of sale (POS) without having to individually setup arrangements with each individual underwriter associated with those options.

### BACKGROUND

The financial industry is comprised of many thousands of customers, vendors, lenders, borrowers, and other bit players that all interact in various ways to enable customers to ultimately have access to goods and services provided by vendors. Credit and debit transactions have long been a way that individuals have managed point of sale transactions to ensure seamless transfer of funds from customers, or on their behalf, to vendors for relatively routine or small transactions. Meanwhile, obtaining a loan from a bank has long been the most common way of obtaining financing for non-routine or larger transactions.

In each of the cases above, a relatively rigid and pre-planned sequence of activities occurs before, during, and after the transaction is closed. The customer makes the decision up front as to which mechanism to employ, and the handling of the entire transaction after that initial decision is made follows existing and well-known paths to completion. While there is great flexibility in that many options are available to customers (particularly those with good credit), the flexibility can be somewhat illusory in situations in which merchants do not accept a certain payment method.

Merchant acceptance of payment methods may, in some cases, be a function of the costs to the merchant for accepting each payment method. If the merchant has to pay to access processing services for a given payment method, the merchant may decide to forgo the opportunity based on cost. However, in some situations, the merchant may actually have to take positive steps to apply for participation in a particular payment platform and/or may have to obtain specific equipment. The rigmarole associated with arranging relationships with multiple entities in order to secure multiple payment options for customers can be beyond the capabilities of some merchants.

Example embodiments are aimed at providing a single platform via which one facilitator can provide multiple aggregated financing options at the point of sale for a member merchant without requiring the member merchant to contract or have a relationship with any of the entities that underwrite the respective financing options. Thus, for example, the member merchant can simply affiliate with the facilitator, and thereby provide customers with access to multiple different financing options that are curated by the facilitator. As such, example embodiments reduce the transactional friction described above by creating a technical platform that uses intelligent technical means by which to not only make provision of financing options to customers easier for the merchant, but also make it attractive and relatively automated for the individual entities that participate in the ecosystem created by the platform.

### BRIEF SUMMARY OF SOME EXAMPLES

Accordingly, some example embodiments may enable the provision of technical means by which to give a facilitator of loans the ability to give merchants improved access to customers via integration into an ecosystem for supporting commerce between members (e.g., customers, merchants and lenders) of the ecosystem.

In an example embodiment, a method for facilitating presentation of financial offers from multiple sources on a single platform may be provided. The method may include receiving an indication of a request from a customer for a financing offer, receiving qualification information associated with the request for provision to a plurality of underwriting models where the underwriting models are associated with respective different underwriters, running each of the underwriting models to determine a listing of approving underwriters, applying curation logic to the listing of approving underwriters, selecting, based on the curation logic, one or more of the approving underwriters to receive a generated offer, and directing display, at a communication device associated with the customer, of the generated offer for each of the one or more of the approving underwriters that is selected.

In another example embodiment, an apparatus for facilitating presentation of financial offers from multiple sources on a single platform may be provided. The apparatus may include processing circuitry configured for receiving an indication of a request from a customer for a financing offer, receiving qualification information associated with the request for provision to a plurality of underwriting models where the underwriting models are associated with respective different underwriters, running each of the underwriting models to determine a listing of approving underwriters, applying curation logic to the listing of approving underwriters, selecting, based on the curation logic, one or more of the approving underwriters to receive a generated offer, and directing display, at a communication device associated with the customer, of the generated offer for each of the one or more of the approving underwriters that is selected.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 illustrates a functional block diagram of a system for providing a selective financing and payment platform according to an example embodiment;
FIG. 2 illustrates a functional block diagram of an apparatus for defining a facilitation agent according to an example embodiment;
FIG. 3 illustrates a block diagram showing control flow for aggregating financial offers from a single marketplace platform in accordance with an example embodiment;
FIG. 4 is a block diagram of a control flow for processing that may be undertaken by the facilitation agent in accordance with an example embodiment; and
FIG. 5 illustrates a block diagram of a method for facilitating presentation of financial offers from multiple sources on a single platform in accordance with an example embodiment.

### DETAILED DESCRIPTION

Some example embodiments now will be described more fully hereinafter with reference to the accompanying drawings, in which some, but not all example embodiments are shown. Indeed, the examples described and pictured herein should not be construed as being limiting as to the scope, applicability or configuration of the present disclosure. Rather, these example embodiments are provided so that this disclosure will satisfy applicable legal requirements. Like reference numerals refer to like elements throughout. Furthermore, as used herein, the term "or" is to be interpreted as a logical operator that results in true whenever one or more of its operands are true. As used herein, operable coupling should be understood to relate to direct or indirect connection that, in either case, enables functional interconnection of components that are operably coupled to each other. Additionally, when the term "data" is used, it should be appreciated that the data may in some cases include simply data or a particular type of data generated based on operation of algorithms and computational services, or, in some cases, the data may actually provide computations, results, algorithms and/or the like that are provided as services.

As used in herein, the term "module" is intended to include a computer-related entity, such as but not limited to hardware, firmware, or a combination of hardware and software (i.e., hardware being configured in a particular way by software being executed thereon). For example, a module may be, but is not limited to being, a process running on a processor, a processor (or processors), an object, an executable, a thread of execution, and/or a computer. By way of example, both an application running on a computing device and/or the computing device can be a module. One or more modules can reside within a process and/or thread of execution and a module may be localized on one computer and/or distributed between two or more computers. In addition, these components can execute from various computer readable media having various data structures stored thereon. The modules may communicate by way of local and/or remote processes such as in accordance with a signal having one or more data packets, such as data from one module interacting with another module in a local system, distributed system, and/or across a network such as the Internet with other systems by way of the signal. Each respective module may perform one or more functions that will be described in greater detail herein. However, it should be appreciated that although this example is described in terms of separate modules corresponding to various functions performed, some examples may not necessarily utilize modular architectures for employment of the respective different functions. Thus, for example, code may be shared between different modules, or the processing circuitry itself may be configured to perform all of the functions described as being associated with the modules described herein. Furthermore, in the context of this disclosure, the term "module" should not be understood as a nonce word to identify any generic means for performing functionalities of the respective modules. Instead, the term "module" should be understood to be a modular component that is specifically configured in, or can be operably coupled to, the processing circuitry to modify the behavior and/or capability of the processing circuitry based on the hardware and/or software that is added to or otherwise operably coupled to the processing circuitry to configure the processing circuitry accordingly.

Some example embodiments described herein provide for a data processing platform that can be instantiated at an apparatus comprising configurable processing circuitry. The processing circuitry may be configured to execute various processing functions on financial data using the techniques described herein. The data processing platform may, for example, be configured to provide an information exchange via which multiple independent or even proprietary platforms may be connected to each other. As such, the data processing platform may be embodied as a selective financing and payment platform (i.e., SFP platform) that connects customers and merchants (or vendors) to banks, payment services, and a transaction facilitator within the financial industry. By enabling data between the players on or members of the platform to be shared, and by further providing customers with tools for using the platform to manage individual transactions before, during and also sometimes after the transactions occur, customers may have increased flexibility for managing their funds in a way that prevents over-extension, while still maximizing their access to the goods and services they desire or need at any given time. Moreover, the platform may be employed under the management of the facilitator to control the usage of data on mutually agreeable terms for all participants who access the platform. Accordingly, a commercial framework can be provided by a technical platform designed to connect customers with access to financial support to effect transactions in real time with added flexibility to determine terms upon which each transaction will be executed with participating merchants. The technical platform described herein, however, further enables the facilitator to curate the provision of financing offers to customers when such customers reach the point of sale (POS) in online transactions with a given merchant. In particular, merchants who participate as a member of the ecosystem created by example embodiments can affiliate, cooperate, or otherwise interact with the facilitator to enable the facilitator to act as curator for financing options at the POS. Thus, the merchant need only actually create a relationship directly with the facilitator. Meanwhile, the facilitator may affiliate, cooperate or otherwise interact with a number of different loan underwriters and curate the offers provided to each individual customer in a controlled and intelligent manner that is managed on a technical platform of the facilitator. In other words, the facilitator has the direct relationships with the underwriters, can employ different underwriting models associated with each of the underwriters in a technically managed sequence, and curate the provision of offers for financing from among the potential multiplicity of underwriters in a way that maximizes the customer's access to financing that is appropriate for him/her individually. Accordingly, instead of merely having a passive platform that enables merchants that are members of the ecosystem to provide fixed financing options to customers, where the financing options may lead to rejection of some customers based on the underwriting models associated therewith, example embodiments will provide a technical means by which to enable merchants to ensure that the customer receives only curated offers for which the customers are effectively pre-qualified using the respective different underwriting models that the facilitator can apply to individual customers This makes the checkout process faster, and more satisfying for the customer, while preserving the customer's ability to access credit that is suitable to him/her individually in a seamless and easy way. The creation of a technical platform for proactively curating financing offers, may also expand the ecosystem in which customers (many of whom may wish to utilize the platform to make purchases via buy now, pay later (BNPL) financing) can engage in transactions with merchants. This may drive more sales for participating merchants, and more satisfaction for the customers. As such, one platform, managed by the facilitator, may be provided for the interaction of multiple parties to enable usage of the platform to provide a flexible and yet cohesive experience for customers that maximizes responsible access to financial freedom and satisfaction.

Example embodiments not only provide the SFP platform, but also provide various enabling technologies that may facilitate operation of the SFP platform itself or of modules that may interact with the SFP platform for processing transactions amongst parties that engage with, or are members of, the ecosystem created by the SFP platform. Example embodiments therefore provide the SFP platform, supporting structures and technologies for its use, and also for processing transactions between members (e.g., lenders, customers and merchants). Moreover, as noted above, the SFP platform further takes an active role in identifying financing offers that are best suited for individual customers that interact with the SFP platform, and curates or specifically and technically manages the offers that are provided to the customers based on behind the scenes processing that is undertaken by the SFP platform. In other words, example embodiments may also provide for enhancement of functionalities associated with the environment that is created by the SFP platform, particularly in relation to the aggregation of financing offers for customers, and the curation of those offers that best suit respective participants in the ecosystem of the SFP platform. The SFP platform may therefore provide a technical mechanism by which to enhance commerce in a responsible way that is both empathetic and empowering to customers and merchants.

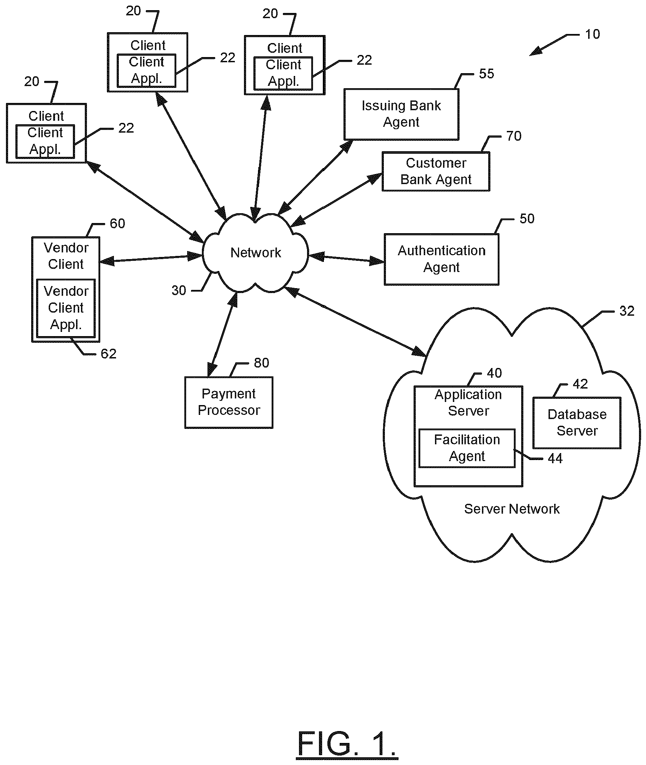

An example embodiment will now be described in reference to FIG. 1, which illustrates an example system in which an embodiment of the present invention may be employed. As shown in FIG. 1, a system comprising an SFP platform 10 according to an example embodiment may include one or more client devices (e.g., clients 20). Notably, although FIG. 1 illustrates three clients 20, it should be appreciated that a single client or many more clients 20 may be included in some embodiments and thus, the three clients 20 of FIG. 1 are simply used to illustrate a potential for a multiplicity of clients 20 and the number of clients 20 is in no way limiting to other example embodiments. In this regard, example embodiments are scalable to inclusion of any number of clients 20 being tied into the SFP platform 10. Furthermore, in some cases, some embodiments may be practiced on a single client without any connection to the SFP platform 10.

The clients 20 may, in some cases, each be associated with a single individual or customer. However, in some embodiments, one or more of the clients 20 may be associated with an organization (e.g., a company) or group of individuals (e.g., a family unit). In general, the clients 20 may be referred to as members of the environment or community associated with the SFP platform 10.

Each one of the clients 20 may include one or more instances of a communication device such as, for example, a computing device (e.g., a computer, a server, a network access terminal, a personal digital assistant (PDA), radio equipment, cellular phone, smart phone, or the like) capable of communication with a network 30. As such, for example, each one of the clients 20 may include (or otherwise have access to) memory for storing instructions or applications for the performance of various functions and a corresponding processor for executing stored instructions or applications. Each one of the clients 20 may also include software and/or corresponding hardware for enabling the performance of the respective functions of the clients 20 as described below. In an example embodiment, the clients 20 may include or be capable of executing a client application 22 configured to operate in accordance with an example embodiment of the present invention. In this regard, for example, the client application 22 may include software for enabling a respective one of the clients 20 to communicate with the network 30 for requesting and/or receiving information and/or services via the network 30 as described herein. The information or services receivable at the client applications 22 may include deliverable components (e.g., downloadable software to configure the clients 20, or information for consumption/processing at the clients 20). As such, for example, the client application 22 may include corresponding executable instructions for configuring the client 20 to provide corresponding functionalities for sharing, processing and/or utilizing financial data as described in greater detail below. In an example embodiment, the client application 22 may be employed to request, configure or use a virtual card, as described in greater detail below.

In some cases, the client application 22 may be an application specifically downloaded for interaction with the SFP platform 10. However, that need not be the case in all situations. In fact, in other examples, the client application 22 could effectively be a browser of the client 20, or an application associated with online shopping at a particular merchant, which need not be instantiated at the client 20, but instead is accessed by the client 20.

The network 30 may be a data network, such as one or more instances of a local area network (LAN), a metropolitan area network (MAN), a wide area network (WAN) (e.g., the Internet), and/or the like, which may couple the clients 20 to devices such as processing elements (e.g., personal computers, server computers or the like) and/or databases. Communication between the network 30, the clients 20 and the devices or databases (e.g., servers) to which the clients 20 are coupled may be accomplished by either wireline or wireless communication mechanisms and corresponding communication protocols.

In an example embodiment, devices to which the clients 20 may be coupled via the network 30 may include one or more application servers (e.g., application server 40), and/or a database server 42, which together may form respective elements of a server network 32. Although the application server 40 and the database server 42 are each referred to as "servers," this does not necessarily imply that they are embodied on separate servers or devices. As such, for example, a single server or device may include both entities and the database server 42 could merely be represented by a database or group of databases physically located on the same server or device as the application server 40. The application server 40 and the database server 42 may each include hardware and/or software for configuring the application server 40 and the database server 42, respectively, to perform various functions. As such, for example, the application server 40 may include processing logic and memory enabling the application server 40 to access and/or execute stored computer readable instructions for performing various functions. In an example embodiment, one function that may be provided by the application server 40 may be the provision of access to information and/or services related to the SFP platform 10, and more particularly relating to facilitating transactions where the parties to the transaction are members of the ecosystem formed by the SFP platform 10 by virtue of their participation in the activities described herein. For example, the application server 40 may be configured to provide for storage of information descriptive of events or activities associated with the SFP platform 10 and the execution of a financial transaction on behalf of a customer in real time. In some cases, data and/or services may be exchanged amongst members, where specific needs or desires of the members are aligned with respect to playing their respective roles in connection with conducting a financial transaction using tools of the SFP platform 10 as described herein.

In some embodiments, for example, the application server 40 may therefore include an instance of a facilitation agent 44 comprising stored instructions for handling activities associated with practicing example embodiments as described herein. The facilitation agent 44 may be a technical device, component or module affiliated with the facilitator of the functioning of the SFP platform 10. Thus, the facilitation agent 44 may operate under control of the facilitator to be a technical means by which to carry out activities under direction of the facilitator or employees thereof. As such, in some embodiments, the clients 20 may access the SFP platform 10 services, and more particularly contact the facilitation agent 44 online and utilize the services provided thereby. However, it should be appreciated that in other embodiments, an application (e.g., the client application 22) enabling the clients 20 to interact with the facilitation agent 44 (or components thereof) may be provided from the application server 40 (e.g., via download over the network 30) to one or more of the clients 20 to enable recipient clients to instantiate an instance of the client application 22 for local operation such that the facilitation agent 44 may be a distributor of software enabling members or parties to participate in operation of the SFP platform 10. Alternatively, another distributor of the software may provide the client 20 with the client application 22, and the facilitation agent 44 may communicate with the client 20 (via the client application 22) after such download to execute functionalities described herein in a client/server relationship. However, as noted above, the client application 22 need not necessarily be instantiated on the client 20 directly, or could effectively be a web browser of the client 20.

In an example embodiment, the client application 22 may therefore include application programming interfaces (APIs) and other web interfaces to enable the client 20 to conduct business or transactions via the SFP platform 10. The client application 22 may include a series of control consoles or web pages including a landing page, onboarding services, activity feed, account settings (e.g., user profile information), transaction management services, payment management services and the like in cooperation with a service application that may be executed at the facilitation agent 44. Thus, for example, the client application 22 may enable the customer to review monthly statements, request a virtual card, change settings associated with the virtual (or digital) card, access or adjust information associated with the customer account, or receive help or other information. Budgeting tools and other useful information and other useful tools for managing the finances of the customer may also be available via the client application 22 in some cases.

In an example embodiment, the application server 40 may include or have access to memory (e.g., internal memory or the database server 42) for storing instructions or applications for the performance of various functions and a corresponding processor for executing stored instructions or applications. For example, the memory may store an instance of the facilitation agent 44 configured to operate in accordance with an example embodiment of the present invention. In this regard, for example, the facilitation agent 44 may include software for enabling the application server 40 to communicate with the network 30 and/or the clients 20 for the provision and/or receipt of information associated with performing activities as described herein. Moreover, in some embodiments, the application server 40 may include or otherwise be in communication with an access terminal (e.g., a computer including a user interface) via which individual operators or managers of the entity associated with the facilitation agent may interact with, configure or otherwise maintain the SFP platform 10 and/or the facilitation agent 44.

As such, the environment of FIG. 1 illustrates an example in which provision of content and information associated with the financial industry (e.g., including at least some data provided to/from customers and/or vendors in real-time) may be accomplished by a particular entity (namely the facilitation agent 44 residing at the application server 40). Thus, the facilitation agent 44 may be configured to handle provision of content and information associated with tasks that are associated only with the SFP platform 10. Access to the facilitation agent 44 may therefore be secured as appropriate for the individuals or organizations involved and credentials of individuals or organizations attempting to utilize the tools provided herein may be managed by digital rights management services or other authentication and security services or protocols that are outside the scope of this disclosure.

The SFP platform 10 may also operate in cooperation with a bank authentication agent 50, an issuing bank agent 55, a vendor client 60, a customer bank agent 70, and a payment processor 80. The facilitation agent 44 may be configured to interact with, or otherwise facilitate interactions between, each of the bank authentication agent 50, the issuing bank agent 55, the vendor client 60, the customer bank agent 70, and the payment processor 80 in order to carry out example embodiments as described herein. Thus, each of the bank authentication agent 50, the issuing bank agent 55, the vendor client 60, the customer bank agent 70, and the payment processor 80 should be understood to be a computer, server, smart phone, or other technical component or module associated with a respective party (e.g., an authenticating bank, issuing bank, a vendor, a customer bank, and a payment service, respectively) that is capable of communication with other parties via the network 30, and under control of or responsive to facilitating communication by the facilitation agent 44.

The vendor client 60 may be similar to the client 20 described above, in some cases, except that the vendor client 60 may be associated with a merchant or vendor instead of a customer. The vendor client 60 may therefore also include a downloadable client application (e.g., vendor client application 62) similar to the client application 22 described above. Thus, for example, the vendor client application 62 may, for example, be an application specific to enabling access and interaction with the SFP platform 10, or could be an online sales website hosting application or similar functioning application of the vendor that integrates with the SPF platform 10. As such, the function of the vendor client application 62 may further interface with the facilitation agent 44 as described in greater detail below in order to handle onboarding of the merchant into the ecosystem of the SFP platform 10.

The issuing bank may be a bank or other financial services provider. The issuing bank may have a persistent relationship with the entity associated with the facilitation agent 44 (e.g., the facilitator), but generally need not have any persistent or pre-existing relationship with the customer or the customer bank. The issuing bank may be contracted with or otherwise have a pre-existing relationship with the facilitation agent 44 (and entity associated therewith) that enables the facilitation agent 44 to facilitate transactions on behalf of the customer when certain conditions (agreed upon in advance by the entity associated with the facilitation agent 44 and the issuing bank) are met associated with a transaction undertaken (or attempted) by the customer via the client 20 and client application 22. For example, the issuing bank may be the issuer of credit to the customer on behalf of the facilitation agent 44 and be responsible for directly paying the merchants and vendors during a transaction initiated by the customer via the operation of the SFP platform 10. Notably, the issuing bank may be one of a plurality of different banks or underwriters that participates in the SFP platform 10. Each such underwriter may have its own respective models or rules for making underwriting decisions and, as will be seen in detail below, those respective models or rules may be shared with or provided to the SFP platform 10 to enable curation of financing offers as described in greater detail below.

The bank authenticator may be an agent or financial service provider capable of granting the facilitation agent 44 access to the customer bank to view account balances and credentials. The balances and credentials may be used or relied upon to pull or push funds from or to the customer bank using the payment processor 80. Thus, for example, the bank authenticator may utilize its own software, application programming interfaces (APIs) or the like that define an infrastructure or intermediary platform to connect a customer's bank account with the facilitation agent 44.

The customer bank may be a bank at which the customer (i.e., associated with one of the clients 20) deposits money in a bank account such as a savings account or a checking account. In an example embodiment, the customer may apply via the facilitation agent 44 to enroll as a member of the SFP platform 10 and enable the customer to make purchases via transactions arranged in association with the facilitation agent 44 using, for example, online payment processing, a virtual card, a physical credit or debit card, or other payment method where the facilitator arranges for the issuing bank to issue a loan (e.g., a BNPL loan or conventional loan) to the customer and advances funds to the merchant associated with the vendor client 60 on behalf of the customer. During application, subscription or registration for participation in the SFP platform 10, either in advance of a sale, or at the POS, the customer may be prompted (via the client 20 and client application 22) by the facilitation agent 44 to provide account details identifying the savings account or checking account (i.e., a customer account) at the customer bank. The customer may, by registering or subscribing, further authorize the facilitation agent 44 to conduct specific activities related to the customer account when corresponding conditions are met, which may be facilitated by one of or a combination of the bank authenticator and the issuing bank as described above. The activities may include checking account status (i.e., checking a current balance of funds deposited in the customer account) and/or authorizing withdrawal of funds from the customer account by the payment processor 80 in order to settle a transaction or make payments to the facilitation agent 44. Credit checks or other activities enabling the customer to be approved for issuance of the virtual card may then be accomplished by the facilitation agent 44.

The payment processor 80 may be an agent or service that facilitates the acceptance and/or sending of payments between parties online. Thus, for example, the payment processor 80 may utilize its own software, application programming interfaces (APIs) or the like that define an infrastructure or payment platform to connect businesses or companies to manage their businesses or transactions online. Payments may be provided to the merchant or vendor on behalf of the customer when using the virtual card or other credit vehicles to make a purchase, and the corresponding amount of the purchase may be converted into a loan (e.g., a BNPL loan or other loan) for the customer. Payments may also or alternatively be made by the customer to service the loan via the payment processor 80.

The customer bank agent 70 may change for each respective one of the clients 20 (and therefore for each respective customer). Similarly, the vendor client 60 may change for each respective transaction since different vendors may be involved in different transactions involving the clients 20. In some examples, the bank authentication agent 50 and the payment processor 80 may remain the same entities across all transactions managed by the facilitation agent 44. However, the facilitation agent 44 could use different bank authentication agents in different geographic areas or jurisdictions, and the payment processor 80 may also change on the same bases. In some cases, the facilitation agent 44 may use different bank authentication agents 50 in order to ensure all customers' banks can be accommodated. For example, if the customer bank was not serviced by a first bank authentication agent, the facilitation agent 44 is configured to swap in a second bank authentication agent that would allow for servicing of the customer bank. Accordingly, the facilitation agent 44 is configured to swap each of the payment processors 80 and the bank authentication agents 50 under certain circumstances. For example, the bank authentication agent 50 may be swapped by the facilitation agent 44 if the bank authentication agent 50 is temporarily offline or if the bank authentication agent 50 did not support a customer bank.

As noted above, the SFP platform 10 may operate to enable the customer associated with a given one of the clients 20 to make a purchase in real time from a merchant or vendor associated with the vendor client 60 online using a payment method arranged by the facilitator for the customer with financing also arranged by the facilitator as described herein. In some example embodiments, the client application 22 may be used in connection with setting up the account details that are then used as the basis for managing interactions between the parties shown in FIG. 1 under control of the facilitation agent 44. In this regard, for example, the client application 22 may be used to engage (e.g., via a website and corresponding APIs) with the facilitation agent 44 to set up an account with the facilitation agent 44 for services associated with the SFP platform 10. The facilitation agent 44 may prompt the client 20 to provide account details associated with the customer bank agent 70 and may provide terms and conditions (electronically or via mail or other communication means) that the customer may accept to establish a user profile and user account with the facilitation agent 44.

During establishment of the user account, the customer may provide an identification of the customer bank associated with the customer bank agent 70, and may also provide details for the savings or checking account that the customer maintains at the customer bank. The customer may also authorize the facilitation agent 44 to make real time (or anytime) checks on account status (e.g., account balance) or to make periodic routine checks of the same. Thus, for example, for each transaction, the facilitation agent 44 may be enabled to check the account balance of the customer. Alternatively or additionally, the facilitation agent 44 may make routine checks or snapshot looks at the account balance. For example, a check may be made every day at a certain time, every two or three days, or at other standard or random intervals. The account status of the customer bank may be used by the facilitation agent 44 in facilitating payment transactions, and determining credit limits or making credit extension decisions. The establishment of the user account may, in some cases, occur as the natural result of completing the transaction, and may not be experienced by the customer as a separate event. In such examples, the customer may, for example, be at the POS (e.g., the online checkout page of a merchant associated with the vendor client 60) and accept a financing offer. The acceptance of the financing offer may effectively initiate the creation of the user account with integrated or separate interactions that parallel those described above.

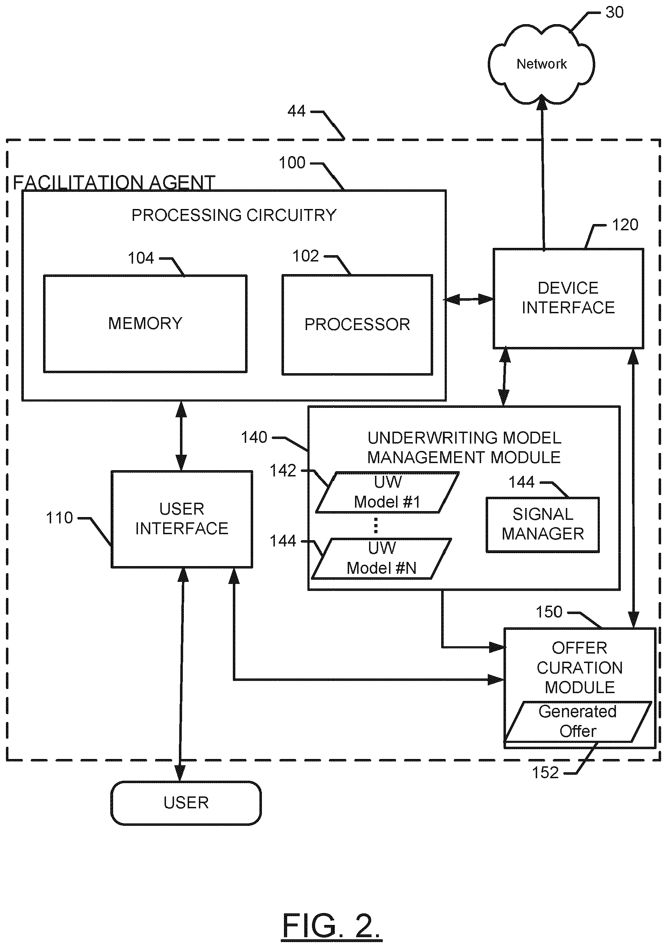

Regardless of how the transactions are initiated, the SFP platform 10 of FIG. 1 may be used before, during and after the time of the transaction in order to enable the facilitation agent 44 to set up the user account for a customer, make determinations necessary to initiate the transactions in real time responsive to initiation of the transaction, and facilitate enabling the customer and to determine the treatment of transactions thereafter. Each of these activities may have its own respective timing and communications that are facilitated by the facilitation agent 44. However, example embodiments may further, as noted above, effectively and efficiently manage the curation of the financing offers that are accessed via the ecosystem as well. Thus, as more merchants and lenders or underwriters become part of the ecosystem, the experience for customers may be enriched by enhancing the number of ecosystem participants and therefore the number of opportunities for advantageous engagement between members of the ecosystem. Notably, in some embodiments, support for transactions may not be limited only to merchants that are members of the ecosystem. However, by becoming an integrated member of the ecosystem, merchants may be enabled to offer more services, enhancements, offers, and enticements to customers. Thus, integrated merchants may be empowered to attract more customers through engagement enabled by the SFP platform 10 (e.g., via enhanced tool kits, information about customers, or access) than those who are not integrated. Thus, again, enriching the ecosystem provides improved outcomes for all members or participants in the ecosystem. Various examples of structures associated with an apparatus at which the facilitation agent 44 of an example embodiment may be instantiated will be described in reference to FIG. 2.

FIG. 2 shows certain elements of an apparatus for provision of the facilitation agent 44 or other processing circuitry according to an example embodiment. The apparatus of FIG. 2 may be employed, for example, as the facilitation agent 44 itself operating at, for example, a network device, server, proxy, or the like (e.g., the application server 40 of FIG. 1)). Alternatively, embodiments may be employed on a combination of devices (e.g., in distributed fashion on a device (e.g., a computer) or a variety of other devices/computers that are networked together). Accordingly, some embodiments of the present invention may be embodied wholly at a single device (e.g., the application server 40) or by devices in a client/server relationship (e.g., the application server 40 and one or more clients 20/vendor clients 60). Thus, although FIG. 2 illustrates the facilitation agent 44 as including the components shown, it should be appreciated that some of the components may be distributed and not centrally located in some cases. Furthermore, it should be noted that the devices or elements described below may not be mandatory and thus some may be omitted or replaced with others in certain embodiments.

Referring now to FIG. 2, an apparatus for provision of tools, services and/or the like for facilitating an exchange for information and services associated therewith in the financial industry is provided. The apparatus may be an embodiment of the facilitation agent 44 or a device of the SFP platform 10 hosting the facilitation agent 44. As such, configuration of the apparatus as described herein may transform the apparatus into the facilitation agent 44. In an example embodiment, the apparatus may include or otherwise be in communication with processing circuitry 100 that is configured to perform data processing, application execution and other processing and management services according to an example embodiment of the present invention. In one embodiment, the processing circuitry 100 may include a storage device (e.g., memory 104) and a processor 102 that may be in communication with or otherwise control a user interface 110 and a device interface 120. As such, the processing circuitry 100 may be embodied as a circuit chip (e.g., an integrated circuit chip) configured (e.g., with hardware, software or a combination of hardware and software) to perform operations described herein. However, in some embodiments, the processing circuitry 100 may be embodied as a portion of a server, computer, laptop, workstation or even one of various mobile computing devices. In situations where the processing circuitry 100 is embodied as a server or at a remotely located computing device, the user interface 110 may be disposed at another device (e.g., at a computer terminal) that may be in communication with the processing circuitry 110 via the device interface 120 and/or a network (e.g., network 30).

The user interface 110 may be in communication with the processing circuitry 100 to receive an indication of a user input at the user interface 110 and/or to provide an audible, visual, mechanical or other output to the user. As such, the user interface 110 may include, for example, a keyboard, a mouse, a joystick, a display, a touch screen, a microphone, a speaker, augmented/virtual reality device, or other input/output mechanisms. In embodiments where the apparatus is embodied at a server or other network entity, the user interface 110 may be limited or even eliminated in some cases. Alternatively, as indicated above, the user interface 110 may be remotely located. For example, in some cases, the user interface 110 may be disposed at a remote device (e.g., the client 20/vendor client 60) and may therefore be operable through communication via the network 30.

The device interface 120 may include one or more interface mechanisms for enabling communication with other devices and/or networks. In some cases, the device interface 120 may be any means such as a device or circuitry embodied in either hardware, software, or a combination of hardware and software that is configured to receive and/or transmit data from/to a network (e.g., network 30) and/or any other device or module in communication with the processing circuitry 100. In this regard, the device interface 120 may include, for example, an antenna (or multiple antennas) and supporting hardware and/or software for enabling communications with a wireless communication network and/or a communication modem or other hardware/software for supporting communication via cable, digital subscriber line (DSL), universal serial bus (USB), Ethernet or other methods. In situations where the device interface 120 communicates with a network, the network 30 may be any of various examples of wireless or wired communication networks such as, for example, data networks like a Local Area Network (LAN), a Metropolitan Area Network (MAN), and/or a Wide Area Network (WAN), such as the Internet, as described above.

In an example embodiment, the memory 104 may include one or more nontransitory storage or memory devices such as, for example, volatile and/or non-volatile memory that may be either fixed or removable. The memory 104 may be configured to store information, data, applications, instructions or the like for enabling the apparatus to carry out various functions in accordance with example embodiments of the present invention. For example, the memory 104 could be configured to buffer input data for processing by the processor 102. Additionally or alternatively, the memory 104 could be configured to store instructions for execution by the processor 102. As yet another alternative, the memory 104 may include one of a plurality of databases (e.g., database server 42) that may store a variety of files, contents or data sets. Among the contents of the memory 104, applications (e.g., a web or service application configured to interface with the client application 22/vendor client application 62) may be stored for execution by the processor 102 in order to carry out the functionality associated with each respective application.

The processor 102 may be embodied in a number of different ways. For example, the processor 102 may be embodied as various processing means such as a microprocessor or other processing element, a coprocessor, a controller or various other computing or processing devices including integrated circuits such as, for example, an ASIC (application specific integrated circuit), an FPGA (field programmable gate array), a hardware accelerator, or the like. In an example embodiment, the processor 102 may be configured to execute instructions stored in the memory 104 or otherwise accessible to the processor 102. As such, whether configured by hardware or software methods, or by a combination thereof, the processor 102 may represent an entity (e.g., physically embodied in circuitry) capable of performing operations according to embodiments of the present invention while configured accordingly. Thus, for example, when the processor 102 is embodied as an ASIC, FPGA or the like, the processor 102 may be specifically configured hardware for conducting the operations described herein. Alternatively, as another example, when the processor 102 is embodied as an executor of software instructions, the instructions may specifically configure the processor 102 to perform the operations described herein.

In an example embodiment, the processor 102 (or the processing circuitry 100) may be embodied as, include or otherwise control the facilitation agent 44, which may be any means such as a device or circuitry operating in accordance with software or otherwise embodied in hardware or a combination of hardware and software (e.g., processor 102 operating under software control, the processor 102 embodied as an ASIC or FPGA specifically configured to perform the operations described herein, or a combination thereof) thereby configuring the device or circuitry to perform the corresponding functions of the facilitation agent 44 as described below.

In some cases, the facilitation agent 44 may be configured to include tools to facilitate the creation of customer, merchant or user accounts (and a corresponding profile for each), the provision of tools to enable merchants to define marketing programs, incentives, sales, etc., the means by which customers can engage merchants to pay for services (e.g., financed by a loan such as a BNPL loan), and the coordination of communication and fund transfers to support the operations of the SFP platform 10 as described herein. The tools may be provided in the form of various modules that may be instantiated by configuration of the processing circuitry 100. Many of those tools may relate to aspects that are outside the scope of this disclosure, and therefore will not be discussed specifically herein. Instead, FIG. 2 illustrates some examples of modules that may be included in the facilitation agent 44 and that may be individually configured to perform one or more of the individual tasks or functions generally attributable to the facilitation agent 44 according to an example embodiment and relevant to the focus of this disclosure. However, the facilitation agent 44 need not necessarily be modular. In cases where the facilitation agent 44 employs modules, the modules may, for example, be configured to perform the tasks and functions described herein. In some embodiments, the facilitation agent 44 and/or any modules comprising the facilitation agent 44 may be any means such as a device or circuitry operating in accordance with software or otherwise embodied in hardware or a combination of hardware and software (e.g., processor 102 operating under software control, the processor 102 embodied as an ASIC or FPGA specifically configured to perform the operations described herein, or a combination thereof) thereby configuring the device or circuitry to perform the corresponding functions of the facilitation agent 44 and/or any modules thereof, as described herein.

As shown in FIG. 2, the facilitation agent 44 may include an underwriting model management module 140 and an offer curation module 150. The underwriting model management module 140 may be configured to run or execute a plurality of underwriting models to make a corresponding credit determination for each respective one of the models. Thus, for example, the facilitator may work to obtain agreements and/or establish relationships with respective different lenders or financial service providers (e.g., underwriters), which may be associated with respective different issuing banks (and issuing band agents 55 from FIG. 1), to integrate the underwriters into the ecosystem of the SFP platform 10. The integration itself may include the provision of an underwriting model employed by the corresponding underwriter either generally, or at least for the purposes of interaction with the SFP platform 10. In FIG. 2, a first underwriting model (e.g., UW model #1 142) may be associated with a first underwriter. One or more (and potentially many) other underwriting models may also be provided to the underwriting model management module 140 for each respective one of second, third, fourth, etc. underwriters all the way up to the Nth such model (e.g., UW model #N 144) corresponding to the Nth underwriter.

Each individual underwriting model effectively encodes the business logic used by the corresponding underwriter to make credit determinations (e.g., whether or not to grant or deny credit to the customer being evaluated under the model). The encoding necessarily includes a set of qualification information or signals that are needed as inputs to the model. This, of course, means that different qualification information or signals must correspondingly be obtained by the underwriting model management module 140 to enable the credit determination to be made. In the absence of example embodiments, this requirement for being able to receive, detect or obtain different signals for different lenders is part of the technical challenge for the merchant. As noted herein, the underwriting model management module 140 removes that technical challenge from the merchant, and shifts the burden to the facilitator. The underwriting model management module 140 provides the technical means to meet that burden.

In this regard, for example, the underwriting model management module 140 may include a signal manager 144 that may include a listing of all required signals associated with all of the underwriting models stored in or otherwise accessible to the underwriting model management module 140. The signal manager 144 may be configured to avoid redundancies in such signals since the goal is to be sure that each signal needed for operation of all of the models is obtained, but in many instances different models will use at least some of the same signals. Thus, the requirement for those common signals to exist need not be duplicated in the signal manager 144. Only one instance of such a common signal or signals may be needed, and then the corresponding common signal or signals can be provided to each respective model the that requires the common signal or signals. In some cases, common signals may be anonymized or normalized so that similar signals having small proprietary differences can be substituted for each other with perhaps some translation, again in the interest of avoiding redundancy whenever possible. Thus, the signal manager 144 may result in sharing of signal information between models. With respect to the translation, the signal manager 144 may employ translation tables or machine learning to enable formatting or other technical differences to be modified so that similar signals in form or function can be shared between models without requiring entirely different processing means to be defined for receiving signals that are otherwise functionally very similar. Via such translation, redundancies can be avoided, and efficiencies achieved while the single platform executes or runs each of the underwriting models (either in series or in parallel/simultaneously).

When a new underwriting model is added, the underwriting model management module 140 may be configured to determine whether any new signals are needed, and may be configured to correspondingly obtain such new signals when they are needed. Thus, the signal manager 144 may not only record the listing of all required signals, but the signal manager 144 may be configured to generate new interfaces that can obtain new signals. In some cases, the new interfaces may simply be new questions to ask the customer in the process of obtaining information associated with completing the transaction. However, in other cases, the new interfaces may require engineers or architects to design a new technical interface. The signal manager 144 may therefore be configured to either generate new interfaces automatically, if doing so is possible for a particular new signal, or to inform technical staff that the new interface is needed and request its requisition to the underwriting model management module 140.

In some cases, the signal manager 144 may further include an evaluation function, which may employ machine learning or other tools to evaluate the effectiveness of certain signals in respective ones of the models. Thus, for example, the signal manager 144, using the evaluation function, may be configured to determine strengths of certain models over others with respect to prediction of success in making credit decisions when provided with data indicating whether the customer ended up accepting an offer and paying back the amount loaned (including within prescribed timing parameters). The information generated by the evaluation function may, in some cases, be shared with the lenders either universally or based on an agreement to conditionally share (e.g., involving de-identified data) or purchase of such information.

Once the signal manager 144 has completed the listing of all required signals, and determined that each of the required signals is obtainable with a corresponding interface for a given model, the given model becomes a supported model. The underwriting model management module 140 is configured to run or execute each supported model for each respective customer or merchant that attempts to employ the facilitation agent 44 to obtain financing offers as described herein. At a high level, an output of the underwriting model management module 140 may be either a credit approval or a credit denial for the customer under the corresponding model. Thus, for example, an output of the underwriting model management module 140 may be a listing of approving underwriters (e.g., underwriters whose underwriting model has generated a credit approval for the customer).

Although it may be possible to simply convert each and every credit approval into a corresponding offer of credit to the customer, doing so may not be desirable for any number of reasons. A simple and practical reason to limit the number of credit offers may be to preserve the option for customer choice, but avoid the complication of a large number of offers that must be sifted through and weighed. However, many other reasons may exist. For example, an order or precedence in the presentation of offers may be preferable to enable the facilitator to favor offers from certain lenders that have paid or bid for the right to have precedence, or that are considered superior in the market, or are better tailored to the needs or desires of a given customer. Regardless of the reasons, example embodiments may provide the offer curation module 150 to employ curation rules or curation logic to determine which of the list of approving underwriters should be used for offer generation.

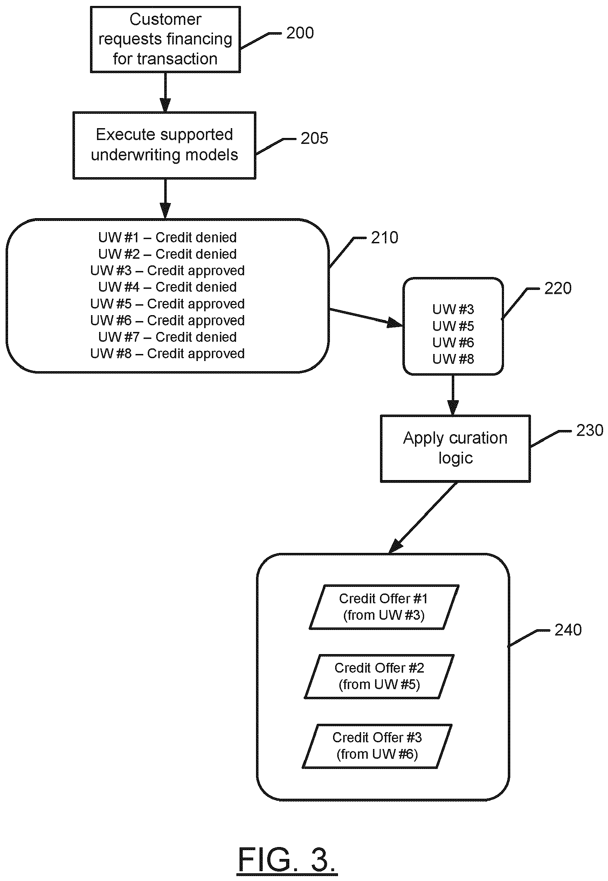

In an example embodiment, the curation rules or curation logic may simply list an order of precedence of all underwriters having supported models. Thus, for example, the list of approving underwriters may be ordered into a hierarchy of approving underwriters. In some cases, a predetermined number of approving underwriters at the top of the hierarchy of approving underwriters may be selected for offer generation. For example, the top three approving underwriters could be selected for offer generation. FIG. 3 provides a schematic diagram illustrating a work flow resulting from the paradigm described above. In this regard, a customer may be understood to have initially proceeded to a checkout page of an online merchant with a product or shopping cart full of products that the customer wishes to purchase. If the customer wishes to utilize a financing option that can be arranged via the merchant (and more specifically via the merchant's relationship with the ecosystem of the SFP platform 10, the customer may select a financing option at operation 200. Thereafter, supported models may be executed at operation 205 to produce a listing of credit determinations 210. The listing of credit determinations is then culled to provide the listing of approving underwriters 220. Curation logic is then applied at operation 230 to rank the approving underwriters and select the top three. A graphic display 240 is then generated at the client 20 of the customer showing a first credit offer 242 from underwriter #3, a second credit offer 244 from underwriter #5, and a third credit offer 246 from underwriter #6. At this point, the customer may select one of the credit offers, and a loan may be originated accordingly, so that funds can be transferred to the merchant on behalf of the customer to complete the transaction.

As an alternative to simply displaying the top three approving underwriters by rank (e.g., in the hierarchy of approving underwriters), the curation logic may employ other selection strategies. For example, since the underwriters may be various different kinds or types of lenders, the curation logic may instead dictate that a highest ranked underwriter for each type of lender is selected for offer generation. Thus, since lender types may include traditional lenders (e.g., banks), BNPL lenders, lease-to-own providers, or the like, a predetermined number of offers for each type of lender may be generated. In such an example, one traditional bank, one BNPL lender and one lease-to-own provider (e.g., the highest ranked underwriter in each category) may be selected for offer generation.

In some cases, lender types may be ranked hierarchically such that offers of a certain type (e.g., BNPL lenders) are favored over other lender types (e.g., traditional banks), which are in turn also favored over other lender types (e.g., lease-to-own lenders). Moreover, as noted above, lenders may bid for placement on a global scale, or for individual customers. Thus, for example, for customers with a credit rating (or other metric determined by the offer curation module 150) above a threshold value, a particular lender may bid for ranking position, or even for exclusive offer generation. The curation logic may be tailored to configure the offer curation module 150 for any of a number of different strategies for the presentation of one or more instances of a generated offer 152 (see FIG. 2) for graphical representation to the customer or user. The customer may then select one of the generated offers (or accept a generated offer if only one such offer is selected).

In an example embodiment, the facilitator may be or be associated with one of the lenders. In such cases, other lenders may be thought by some to be dissuaded from participating in the SFP platform 10 since the facilitator may employ curation logic that favors the facilitator. However, in practice, this is unlikely to occur since the facilitator is giving the other lenders access to customers that they would otherwise not have access to. Moreover, the facilitator may share information on signaling, effective signaling, model effectiveness and/or the like, as noted above, which may also be valuable to the other lenders.

In some embodiments, the underwriter associated with each model may provide further information indicative of the details of the offer that should be generated (e.g., offer generation instructions), when the underwriting model generates a credit acceptance outcome. Thus, the offer curation module 150 may be further configured to present the generated offer 152 in a form and/or with substance corresponding to the offer generation instructions. The offer generation instructions may also be modified by the corresponding underwriter to either make desired changes to the offer generation instructions, or even to run sales, promotions or the like. The offer generation instructions may therefore include details of the maximum amount that can be financed, the terms of financing (e.g., number of payments, interest rate, finance charges, payment term). Any applicable truth-in-lending or other legally required disclosures may also be included for presentation as part of or in connection with the generated offer 152.

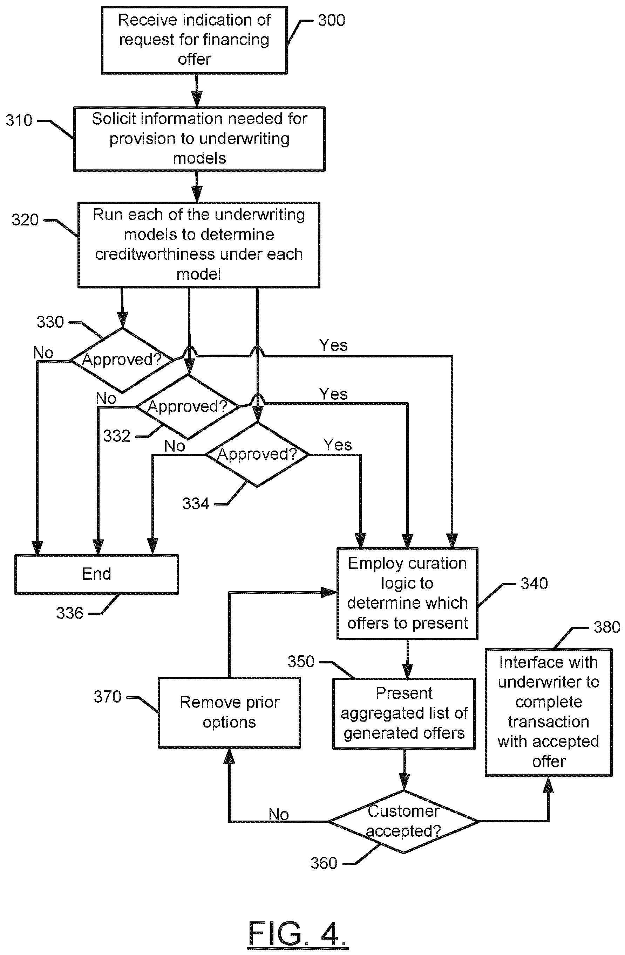

FIG. 4 illustrates a block diagram of a control flow for processing that may be undertaken by the facilitation agent 44 of an example embodiment. In this regard, as shown in FIG. 4, operation may begin with reception of an indication of a request for a financing offer at operation 300. In some cases, as noted above, the customer may be at the checkout page of a website of a merchant, and the merchant may provide a link or other invitation to enable the customer to seek financing for a current transaction related to a product or products the merchant is selling. However, it should also be appreciated that example embodiments could also apply to situations in which the customer requests an offer for financing without having specifically identified a product or transaction. In such example, the customer may, for example, employ a website or application of the facilitator directly and request a financing offer. The request may be processed as outlined below and end up with a voucher, virtual payment card, or other payment vehicle being issued to enable the customer to engage in and complete a transaction using funds obtained via the lender selected via the operations described in greater detail in the remainder of the control flow of FIG. 4.

In any case, once the indication is received, a solicitation for information needed for provision to the underwriting models (e.g., using the underwriting model management module 140) may be provided at operation 310. The solicitation for information may include a series of questions or fields that the customer must fill in. However, other signals may also be employed in some cases, and those signals may not necessarily be obtained via a question and answer method, but may be extracted from other sources including third parties or technical information about the customer's behavior or activities online.

Upon receipt of information or signaling, the underwriting models (e.g., the supported models) may each be run to determine creditworthiness of the customer under each respective one of the models at operation 320. The separate determinations made by multiple models are represented in FIG. 4 by operations 330, 332 and 334, which show respective decision blocks regarding whether the customer is approved for extension of credit under a corresponding model. Although three decision blocks, and therefore three models are represented in FIG. 4, it should be appreciated that example embodiments may apply to either more or fewer models in other cases. For each model for which a result of the decision blocks regarding approval is negative, the process may end with respect to that model and the corresponding underwriter. However, assuming at least one or more approvals are received, each of the received approvals is aggregated into treatment at operation 340.

At operation 340, curation logic (as described above) is applied to determine which of the approvals from operations 330, 332 and 334 (e.g., approving underwriters) will result in offer generation. Thereafter, an aggregated listing of generated offers may be supplied to the customer at operation 350. The aggregated listing may include one or more generated offers. A determination may then be made at operation 360 as to whether the customer has selected one of the offers, or rejected all of them. If any or all have been rejected, the rejected offers may be removed from the prior listing of options to which the curation logic was applied at operation 370, and the curation logic may run again with those options removed, thereby returning flow to operation 340. Thus, a refreshed listing of different options may be provided to the customer. This refreshing of the list may occur each time a single offer is rejected (thereby replacing the rejected offer with a new generated offer next in hierarchical ranking), or after all offers have been rejected. In cases where the replacement is individual, a waterfall of options may be created where a continuous flow of subsequent offers can replace rejected ones until the full list of approving underwriters has been exhausted.

If, at any stage after presentation of the generated offers, one of the offers is selected (and therefore accepted) by the customer, then interface with the underwriter may be conducted by the facilitator at operation 380 to complete the transaction on behalf of the customer based on the accepted offer. Notably, if an example embodiment is performed in which the customer is not at the checkout attempting to complete a transaction for a product or products, but is instead seeking to obtain financing before engaging in a particular transaction, then operation 380 may instead involve interfacing with the underwriter to obtain a voucher, virtual card or other payment vehicle backed by the loan associated with the offer accepted.

As can be appreciated from the descriptions above, a common problem for merchants is that while they would like to drive sales volumes, and therefor would prefer to be able to provide customers with multiple financing options from multiple sources, it is a logistical and potentially also a technical problem to integrate multiple different loan sources into their checkout processes. Each engagement with a different loan source may require time, effort and expense for the merchant, and technical requirements for the different engagements may be complex, costly or even incompatible. Moreover, many financing sources may prefer to be the exclusive option. Thus, example embodiments provide a platform via which a facilitator can enable a participating merchant to obtain access for customers to multiple financing sources through only a single engagement (i.e., with only the facilitator). Only integration with the facilitator is then necessary by the merchant, since the facilitator can handle the different executions of underwriting models for respective financing offer sources, and integrate with the underwriters to obtain signaling they require. One graphical interface, also powered by the facilitator, that provides all options from multiple sources, and is used to complete the financing transaction, and the purchase transaction, may then be employed. Thus, the practical problem is solved via a technical solution that presents multiple offers curated and managed by the facilitator.

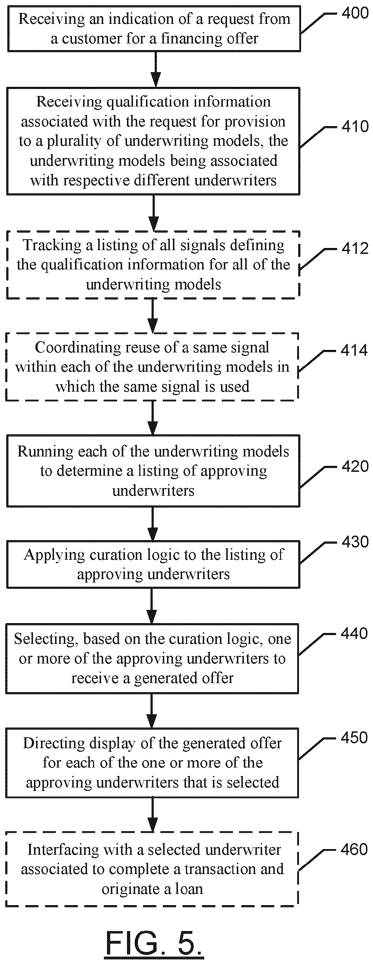

From a technical perspective, the SFP platform 10, and more particularly the facilitation agent 44, described above may be used to support some or all of the operations described above. As such, the apparatus described in FIG. 2 may be used to facilitate the implementation of several computer program and/or network communication based interactions. As an example, FIG. 5 is a flowchart of a method and program product according to an example embodiment of the invention. It will be understood that each block of the flowchart, and combinations of blocks in the flowchart, may be implemented by various means, such as hardware, firmware, processor, circuitry and/or other device associated with execution of software including one or more computer program instructions. For example, one or more of the procedures described above may be embodied by computer program instructions. In this regard, the computer program instructions which embody the procedures described above may be stored by a memory device of a user terminal (e.g., client 20, vendor client 60, application server 40, and/or the like) and executed by a processor in the user terminal. As will be appreciated, any such computer program instructions may be loaded onto a computer or other programmable apparatus (e.g., hardware) to produce a machine, such that the instructions which execute on the computer or other programmable apparatus create means for implementing the functions specified in the flowchart block(s). These computer program instructions may also be stored in a computer-readable memory that may direct a computer or other programmable apparatus to function in a particular manner, such that the instructions stored in the computer-readable memory produce an article of manufacture which implements the functions specified in the flowchart block(s). The computer program instructions may also be loaded onto a computer or other programmable apparatus to cause a series of operations to be performed on the computer or other programmable apparatus to produce a computer-implemented process such that the instructions which execute on the computer or other programmable apparatus implement the functions specified in the flowchart block(s).

Accordingly, blocks of the flowchart support combinations of means for performing the specified functions and combinations of operations for performing the specified functions. It will also be understood that one or more blocks of the flowchart, and combinations of blocks in the flowchart, can be implemented by special purpose hardware-based computer systems which perform the specified functions, or combinations of special purpose hardware and computer instructions.

In this regard, a method for facilitating presentation of financial offers from multiple sources on a single platform is shown in FIG. 5. The method may include may include receiving an indication of a request from a customer for a financing offer at operation 400, and receiving qualification information associated with the request for provision to a plurality of underwriting models at operation 410. In this context, the underwriting models may be associated with respective different underwriters. The method may further include running each of the underwriting models to determine a listing of approving underwriters at operation 420, and applying curation logic to the listing of approving underwriters at operation 430. The method may also include selecting, based on the curation logic, one or more of the approving underwriters to receive a generated offer at operation 440, and directing display, at a communication device associated with the customer, of the generated offer for each of the one or more of the approving underwriters that is selected at operation 450.

In some embodiments, the method (and a corresponding apparatus or system configured to perform the operations of the method) may include (or be configured to perform) additional components/modules, optional operations, and/or the components/operations described above may be modified or augmented. Some examples of modifications, optional operations and augmentations are described below. It should be appreciated that the modifications, optional operations and augmentations may each be added alone, or they may be added cumulatively in any desirable combination. In this regard, for example, the method may further include tracking a listing of all signals defining the qualification information for all of the underwriting models at operation 412, and coordinating reuse of a same signal within each of the underwriting models in which the same signal is used at operation 414. The method may also or alternatively further include, responsive to customer acceptance of one of the generated offers, interfacing with a selected underwriter associated with the one of the generated offers to complete a transaction and originate a loan extended to the customer in association with the transaction at operation 460. In an example embodiment, coordinating reuse of the same signal may include employing a translation between a first signal and a second signal similar, but not identical to the first signal, to translate the first signal for usage in an underwriting model employing the second signal. In some cases, applying the curation logic may include ordering the approving underwriters into a hierarchy of approving underwriters. In an example embodiment, the hierarchy of approving underwriters may be ranked based on a predetermined ranking order. In some cases, the hierarchy of approving underwriters may be ranked based on a type of lender associated with each respective one of the underwriting models. In an example embodiment, the hierarchy of approving underwriters may be ranked based on bids received from a lender associated with each respective one of the underwriting models. In some cases, all of the underwriting models may be received from external sources associated with the respective different underwriters, and each of the underwriting models may be stored at a location commonly accessible by the processing circuitry to enable simultaneous running of the underwriting models by the processing circuitry. In an example embodiment, directing display of the generated offer may include employing offer generation instructions received from the approving underwriters to determine a form and substance of the generated offer, and the offer generation instructions may be updateable by the approving underwriters to tailor the generated offer to a current sale or promotion of a respective one of the approving underwriters.

In an example embodiment, an apparatus for performing the method of FIG. 5 above may comprise a processor (e.g., the processor 102) or processing circuitry configured to perform some or each of the operations (400-460) described above. The processor may, for example, be configured to perform the operations (400-460) by performing hardware implemented logical functions, executing stored instructions, or executing algorithms for performing each of the operations. In some embodiments, the processor or processing circuitry may be further configured for additional operations or optional modifications to operations 400 to 460.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. In cases where advantages, benefits or solutions to problems are described herein, it should be appreciated that such advantages, benefits and/or solutions may be applicable to some example embodiments, but not necessarily all example embodiments. Thus, any advantages, benefits or solutions described herein should not be thought of as being critical, required or essential to all embodiments or to that which is claimed herein. Although specific terms are employed herein, they are used in a generic and descriptive sense only and not for purposes of limitation.

## Claims

1. A method for facilitating presentation of financial offers from multiple sources on a single platform, the method comprising:
receiving an indication of a request from a customer for a financing offer;
receiving qualification information associated with the request for provision to a plurality of underwriting models, the underwriting models being associated with respective different underwriters;
running each of the underwriting models to determine a listing of approving underwriters;
applying curation logic to the listing of approving underwriters;
selecting, based on the curation logic, one or more of the approving underwriters to receive a generated offer; and
directing display, at a communication device associated with the customer, of the generated offer for each of the one or more of the approving underwriters that is selected.

2. The method of claim 1, further comprising:
tracking a listing of all signals defining the qualification information for all of the underwriting models; and
coordinating reuse of a same signal within each of the underwriting models in which the same signal is used.

3. The method of claim 2, wherein the coordinating reuse of the same signal includes employing a translation between a first signal and a second signal similar, but not identical to the first signal, to translate the first signal for usage in an underwriting model employing the second signal.

4. The method of claim 1, wherein applying the curation logic includes ordering the approving underwriters into a hierarchy of approving underwriters.

5. The method of claim 4, wherein the hierarchy of approving underwriters is ranked based on a predetermined ranking order.

6. The method of claim 4, wherein the hierarchy of approving underwriters is ranked based on a type of lender associated with each respective one of the underwriting models.

7. The method of claim 4, wherein the hierarchy of approving underwriters is ranked based on bids received from a lender associated with each respective one of the underwriting models.

8. The method of claim 1, wherein all of the underwriting models are received from external sources associated with the respective different underwriters, and
wherein each of the underwriting models is stored at a location commonly accessible by processing circuitry to enable simultaneous running of the underwriting models by the processing circuitry.

9. The method of claim 1, wherein directing display of the generated offer comprises employing offer generation instructions received from the approving underwriters to determine a form and substance of the generated offer, and
wherein the offer generation instructions are updateable by the approving underwriters to tailor the generated offer to a current sale or promotion of a respective one of the approving underwriters.

10. The method of claim 1, further comprising, responsive to customer acceptance of one of the generated offers, interfacing with a selected underwriter associated with the one of the generated offers to complete a transaction and originate a loan extended to the customer in association with the transaction.

11. An apparatus for facilitating presentation of financial offers from multiple sources on a single platform, the apparatus comprising processing circuitry configured to perform the method of any claims 1-10.
